# FASCICULE DE BREVET EUROPEEN

(11) **EP 4 285 174 B1**
(45) Date de publication et mention de la délivrance du brevet: **12.02.2025**
(21) Numéro de dépôt: 22701922.1
(22) Date de dépôt: 18.01.2022
(51) Int. Cl.: G02B 21/24, G02B 21/33, G02B 21/00, G02B 21/34, G02B 27/00

(54) **DISPOSITIFS POUR L'ANALYSE MICROSCOPIQUE EX VIVO D'ECHANTILLONS ET IN VIVO DE LA PEAU**
VORRICHTUNGEN ZUR EX-VIVO MIKROSKOPISCHEN UNTERSUCHUNG VON PROBEN UND ZUR IN-VIVO MIKROSKOPISCHEN UNTERSUCHUNG DER HAUT
DEVICES FOR EX VIVO MICROSCOPIC ANALYSIS OF SAMPLES AND IN VIVO MICROSCOPIC ANALYSIS OF THE SKIN

(30) Priorité: 29.01.2021 FR 2100899
(43) Date de publication de la demande: 06.12.2023
(73) Titulaire: Damae Medical, 75013 Paris (FR)
(72) Inventeur: OGIEN, Jonas, 75014 Paris (FR); LEVECQ, Olivier, 75009 Paris (FR); SOURP, Alexis, 92400 Courbevoie (FR)
(74) Mandataire: Osha BWB
(86) Numéro de dépôt international: PCT/EP2022/051027
(87) Numéro de publication internationale: WO 2022/161816

(56) Documents cités:
- EP-A1- 3 018 518
- WO-A1-2016/083003
- DE-A1- 102009 044 413

## Description

### Domaine technique de l'invention

La présente description concerne des dispositifs d'analyse microscopique ex vivo d'échantillons et in vivo de la peau, des systèmes d'analyse microscopique intégrant de tels dispositifs et des procédés d'analyse microscopique ex vivo d'échantillons et in vivo de la peau utilisant de tels dispositifs.

### Etat de la technique

Dans le cadre d'un examen dermatologique, il est connu de procéder à un examen dermoscopique, c'est-à-dire une observation de la surface de la peau à l'aide d'un instrument optique grossissant, puis à une analyse microscopique locale en fonction des observations faites sur l'image grand champ obtenue par l'examen dermoscopique.

L'analyse microscopique comprend par exemple l'imagerie microscopique ou l'analyse spectroscopique.

Parmi les techniques d'imagerie microscopique, on connaît notamment, et de façon non limitative, des techniques de microscopie confocale comme par exemple la technique décrite dans Rajadhyaksha *et al* [Réf. 1] ou K. König *et al* [Réf 2] pour la microscopie non linéaire. On connaît également des techniques de microscopie tomographique par cohérence optique (ou OCM selon l'expression anglo-saxonne « *Optical Coherence Microscopy* »), dans le domaine temporel (« Time Domain OCM ») ou dans le domaine fréquentiel (« Frequency Domain OCM »). Parmi les techniques OCM, on connaît des techniques combinant la tomographie par cohérence optique et la microscopie confocale (voir par exemple Schmitt *et al* [Réf. 3]) afin d'améliorer la résolution latérale.

Plus précisément, la demande de brevet WO2015092019 [Réf. 4] décrit une technique de visualisation de la structure interne d'un objet semi-transparent agencé au foyer d'un objectif de microscope, par exemple un tissu biologique, afin d'obtenir des coupes verticales ou « *B-Scans* » orthogonales à la surface de l'objet, à une cadence élevée (plusieurs coupes par seconde), avec une haute résolution spatiale, c'est-à-dire de l'ordre de 1 µm, aussi bien axialement que latéralement, et une profondeur de pénétration satisfaisante, de l'ordre du millimètre. Cette technique est basée sur la microscopie par cohérence optique mais présente une configuration de filtrage confocal linéaire ou unidimensionnel (dans une direction) ; pour cela, la ligne d'éclairage est conjuguée optiquement, notamment au moyen de l'objectif de microscope, avec un détecteur linéaire dont la surface de détection présente une largeur sensiblement identique à une largeur de l'image de la ligne, résultant en un filtrage spatial d'une région de l'objet à observer. Une telle technique est ainsi connue sous le nom de LC-OCT selon l'expression anglo-saxonne (« *Line-field Confocal Optical Coherence Tomography* »).

L'article de Y. Chen *et al.* [Réf. 5] a également proposé un dispositif de microscopie tomographique par cohérence optique à balayage linéaire, mais dans lequel un échantillon est déplacé dans un plan perpendiculaire à un axe optique de l'objectif de microscope, et selon une direction perpendiculaire à la ligne d'éclairage, permettant de former des images *en face* de l'échantillon (ou « *C-Scans* »).

Parmi les techniques d'analyse spectroscopique d'un échantillon, et notamment d'un tissu biologique comme la peau, on connait par exemple et de façon non limitative la spectroscopie Raman qui permet de former une empreinte moléculaire des tissus biologiques, comme décrit par exemple dans Schleusener *et al.* [Réf. 6]. L'article de revue de E. Drakaki *et al.* [Réf. 7] présente de façon générale différentes techniques de spectroscopie appliquée à l'analyse microscopique de la peau.

Toutes les techniques d'analyse microscopique décrites ci-dessus, que ce soit pour l'imagerie ou pour la spectroscopie, utilisent un objectif de microscope présentant une ouverture numérique nominale importante, typiquement supérieure ou égale à 0,5, pour un champ de vue donné, typiquement entre environ 0,2 mm et environ 1,5 mm.

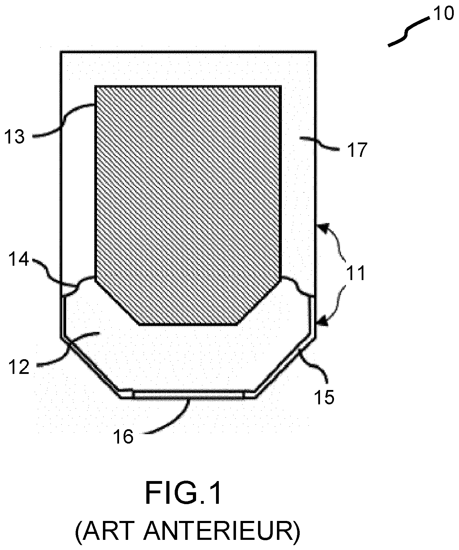

Dans le contexte notamment de l'imagerie microscopique de la peau, l'objectif de microscope peut être intégré de façon mobile dans une monture étanche telle que décrite dans la demande WO2019138062 [Réf. 8] au nom de la déposante et reproduite sur la FIG. 1. La monture étanche 10 comprend notamment un boîtier 11, une chambre 12 remplie d'un milieu d'immersion, un objectif immergé 13 mobile axialement dans la monture, et un organe d'étanchéité déformable 14 qui assure une jonction d'étanchéité entre l'objectif immergé 13 et le boîtier 11. Dans l'exemple de la FIG. 1, l'utilisation d'un milieu d'immersion avec un indice de réfraction sensiblement égal à l'indice de réfraction de l'objet observé permet avantageusement de réduire les écarts de dispersion optique, les variations de chemin optique et l'introduction d'aberrations, de sorte que des images sont obtenues avec une meilleure résolution. Le boîtier 11 comprend une partie circonférentielle 15 et une fenêtre de transmission de lumière 16. Le boîtier 11 comprend en outre une partie externe 17 fixée mécaniquement à la partie circonférentielle 15. La partie circonférentielle 15 et la partie externe 17 du boîtier 11 ont par exemple une forme cylindrique de manière à loger l'objectif immergé mobile 13. La fenêtre de transmission de lumière 16 est couplée à une extrémité de la partie circonférentielle 15. Par exemple, comme illustré sur la FIG. 1, l'extrémité de la partie circonférentielle 15 présente une forme de cône tronqué, où la base de plus petit rayon comprend la fenêtre de transmission de lumière 16. Dans la monture représentée sur la FIG. 1, l'organe d'étanchéité déformable 14 est configuré pour se déformer lors du déplacement de l'objectif immergé 13 par rapport au boîtier 11.

Une telle monture, parfaitement étanche même lors du déplacement axial de l'objectif de microscope dans le boîtier, est ainsi particulièrement adaptée pour une sonde d'analyse in vivo de la peau, destinée à être tenue à la main par un praticien pour se trouver en contact avec la peau.

En pratique, à la suite de l'examen du patient, si la lésion détectée in vivo présente par exemple une suspicion de cancer, le praticien va pratiquer une exérèse, c'est-à-dire qu'il va extraire la partie de la lésion qu'il aura identifiée comme maligne. Une fois l'exérèse effectuée, le praticien doit pouvoir vérifier que l'intégralité de la tumeur a bien été extraite. Pour cela, une analyse ex vivo de l'échantillon prélevé peut être effectuée.

La sonde décrite dans [Réf. 8] et intégrant une monture d'objectif de microscope telle que décrite sur la Fig. 1 pourrait permettre l'analyse ex vivo de l'échantillon prélevée. Cependant, une telle analyse s'avère en pratique difficile, notamment du fait de la complexité à déplacer de façon contrôlée l'échantillon par rapport à la sonde.

D'autres montures sont connues dans le cadre de l'analyse microscopique d'un échantillon, voir par exemple la demande de brevet publiée EP 3 018 518 [Réf. 9], la demande de brevet publiée WO 2016/083003 [Réf. 10] et la demande de brevet publiée DE 10 2009 044 413 [Réf. 11].

Le brevet délivré US10514532 [Réf. 12] décrit un système équipé d'une sonde de microscopie confocale, configuré à la fois pour l'imagerie ex vivo d'échantillons de tissus prélevés lors d'une exérèse et l'imagerie in vivo de la peau. Plus précisément, la sonde de microscopie confocale comprend une monture pour recevoir un objectif de microscope et une fenêtre de transmission agencée à l'extrémité de la monture. La sonde de microscopie confocale est montée sur un bras horizontal couplé à un axe vertical supporté par une plateforme fixe, de telle sorte que le bras horizontal peut tourner autour de l'axe vertical, par exemple à l'aide de poignées agencées sur la sonde. Cet agencement permet, dans un premier mode, de positionner la sonde au-dessus de la plate-forme pour permettre une imagerie ex vivo d'un échantillon déposé sur la plate-forme, et dans un deuxième mode, de tourner la sonde autour de l'axe vertical pour imager un échantillon en dehors de la plateforme, par exemple la peau d'un patient.

Un tel système ne permet pas cependant la flexibilité d'une sonde manuelle, tenue à la main pour une imagerie in vivo de la peau. Par ailleurs, il nécessite un réglage de l'alignement de l'axe optique de l'objectif de microscope, lors du passage de l'imagerie de la peau à l'imagerie d'un échantillon ex vivo.

La présente description propose des dispositifs pour l'analyse microscopique ex vivo d'échantillons et l'analyse in vivo de la peau, permettant d'utiliser une sonde d'analyse microscopique manuelle pour l'analyse ex vivo d'échantillons, sans compromis sur l'ergonomie et sans nécessiter un alignement de l'axe optique de l'objectif de microscope lors du passage d'un mode de fonctionnement in vivo à un mode de fonctionnement ex vivo.

### Résumé de l'invention

Dans la présente description, le terme « comprendre » signifie la même chose que « inclure », « contenir », et est inclusif ou ouvert et n'exclut pas d'autres éléments non décrits ou représentés. En outre, dans la présente description, le terme « environ » ou « sensiblement » est synonyme de (signifie la même chose que) une marge inférieure et/ou supérieure de 10%, par exemple 5%, de la valeur respective.

Selon un premier aspect, la présente description concerne un dispositif configuré pour fonctionner dans un premier mode de fonctionnement comprenant une analyse microscopique in vivo de la peau et dans un deuxième mode de fonctionnement comprenant une analyse microscopique ex vivo d'un échantillon, le dispositif comprenant :
- un objectif de microscope comprenant un axe optique ;
- une monture comprenant une partie distale dans laquelle est agencé ledit objectif de microscope et une partie proximale solidaire de ladite partie distale, ladite partie distale comprenant à une extrémité une première fenêtre de transmission ;
- un premier embout comprenant à une extrémité une deuxième fenêtre de transmission et configuré pour être fixé de manière amovible, dans le premier mode de fonctionnement, à ladite partie distale de la monture ;
- un deuxième embout configuré pour être fixé de manière amovible, dans le deuxième mode de fonctionnement, à ladite partie distale de la monture ;
- un porte-échantillon comprenant une surface de réception configurée pour recevoir un échantillon dans le deuxième mode de fonctionnement ;
- un support configuré pour coopérer avec le deuxième embout dans le deuxième mode de fonctionnement de manière à recevoir ladite monture de telle sorte que l'axe optique de l'objectif de microscope soit sensiblement aligné dans une direction prédéterminée par rapport à la surface de réception.

Le dispositif selon le premier aspect permet au moyen d'un agencement modulaire original, une analyse microscopique in vivo de la peau et ex vivo d'un échantillon résultant par exemple d'une exérèse, sans compromis sur l'ergonomie dans les deux modes de fonctionnement, et sans nécessiter un alignement de l'axe optique de l'objectif de microscope lors du passage d'un mode de fonctionnement in vivo à un mode de fonctionnement ex vivo.

En pratique, dans le premier mode de fonctionnement, équipé du premier embout, le dispositif pourra former une sonde manuelle pour l'analyse microscopique in vivo. Dans le deuxième mode de fonctionnement, équipé du deuxième embout, le dispositif pourra se loger dans le support avec un alignement automatique de l'axe optique dans une direction prédéterminée par rapport à la surface de réception du porte-échantillon, permettant ainsi une grande facilité d'utilisation et assurant une répétabilité dans la façon dont sont analysés les échantillons.

La direction prédéterminée est par un exemple une direction perpendiculaire à la surface de réception, dans le cas notamment d'une surface de réception sensiblement plane. Dans le cas d'une surface de réception non plane, une direction prédéterminée pourra être par exemple une direction perpendiculaire à un plan tangentiel à ladite surface de réception.

Selon un ou plusieurs exemples de réalisation, la première fenêtre de transmission comprend une première lame transparente qui ferme ladite extrémité de la partie distale de la monture. Par « lame transparente », on comprend au sens de la présente description toute lame de nature à transmettre au moins une partie d'une bande spectrale utile pour l'analyse microscopique. Une bande spectrale utile pour l'analyse microscopique comprend au moins une bande spectrale de détection et peut comprendre en outre une bande spectrale d'éclairage dans le cas où une voie d'éclairage de l'échantillon comprend ladite lame transparente. Une lame transparente comprend par exemple une lame de verre ou tout autre matériau transparent dans la bande spectrale utile pour l'analyse microscopique.

Une fermeture de la partie distale de la monture permet de protéger l'objectif de microscope notamment lors du passage d'un mode de fonctionnement à l'autre. Une fermeture permet aussi l'utilisation d'un milieu d'immersion pour un fonctionnement en immersion de l'objectif de microscope. Avec une fenêtre de transmission fermée, l'étanchéité au niveau de l'objectif de microscope peut être assurée, par exemple au moyen d'un dispositif d'étanchéité tel que décrit dans la [réf. 12], y compris lors du passage d'un mode de fonctionnement à l'autre.

Ainsi, selon un ou plusieurs exemples de réalisation, le dispositif comprend en outre un premier milieu d'immersion en contact avec ladite première lame transparente et ledit objectif de microscope. Un premier milieu d'immersion comprend par exemple un liquide ou un gel dont l'indice de réfraction est compris entre environ 1,3 et environ 1,5, c'est-à-dire un indice de réfraction généralement proche de l'objet d'étude, peau ou échantillon. Le premier milieu d'immersion permet notamment, lorsque ledit objectif de microscope est configuré pour se déplacer axialement dans la partie distale de la monture pour une analyse en profondeur dans la peau, de limiter l'introduction de variation du chemin optique et d'aberrations optiques lors d'un tel déplacement. L'utilisation d'un objectif de microscope à immersion permet également de limiter l'écart de dispersion entre les bras d'un interféromètre, dans le cas d'une analyse microscopique comprenant un système interférométrique

Dans d'autres exemples de réalisation, le milieu entre ladite première lame transparente et ledit objectif de microscope peut être simplement de l'air.

Dans d'autres exemples de réalisation, ladite première fenêtre de transmission peut comprendre une simple ouverture formée à ladite extrémité de la partie distale de la monture. Selon un ou plusieurs exemples de réalisation, ladite deuxième fenêtre de transmission comprend une deuxième lame transparente qui ferme ladite extrémité dudit premier embout. La deuxième lame transparente comprend par exemple une lame de verre ou tout autre matériau transparent dans la bande spectrale utile pour l'analyse microscopique.

Dans le premier mode de fonctionnement comprenant une analyse microscopique in vivo de la peau, et dans le cas où les première et deuxième fenêtres de transmission comprennent respectivement des première et deuxième lames transparentes, la deuxième lame transparente, en combinaison avec la première lame transparente, permet l'utilisation d'un deuxième milieu d'immersion en contact avec ladite première lame transparente et ladite deuxième lame transparente.

Ainsi, selon un ou plusieurs exemples de réalisation, le dispositif comprend en outre un deuxième milieu d'immersion en contact avec ladite première lame transparente et ladite deuxième lame transparente. Un deuxième milieu d'immersion comprend par exemple un liquide ou un gel dont l'indice de réfraction est compris entre environ 1,3 et environ 1,5, c'est-à-dire un indice de réfraction généralement proche de l'objet d'étude, peau ou échantillon. Un deuxième milieu d'immersion permet d'améliorer la qualité de l'analyse microscopique dans le cas de l'utilisation d'un objectif de microscope à immersion et de limiter les réflexions aux interfaces, comme par exemple les interfaces avec les lames transparentes.

Selon un ou plusieurs exemples de réalisation, le deuxième milieu d'immersion est identique au premier milieu d'immersion.

Selon un ou plusieurs exemples de réalisation, le deuxième milieu d'immersion est différent du premier milieu d'immersion et présente des caractéristiques mécaniques, chimiques et/ou physiques différentes du premier milieu d'immersion. Notamment, le deuxième milieu d'immersion peut présenter un deuxième indice de réfraction substantiellement identique au premier indice de réfraction du premier milieu d'immersion ou présenter un indice de réfraction différent. Utiliser un deuxième milieu d'immersion différent du premier milieu d'immersion permet par exemple de choisir un deuxième milieu d'immersion qui facilite le passage d'un mode de fonctionnement à l'autre lorsque le premier milieu d'immersion présente des caractéristiques le rendant compliqué à être manipulé.

Alternativement, ladite deuxième fenêtre de transmission peut comprendre une simple ouverture formée à ladite extrémité du premier embout.

Selon un ou plusieurs exemples de réalisation, le porte-échantillon comprend un réceptacle avec une troisième fenêtre de transmission. Par exemple, la troisième fenêtre de transmission comprend une troisième lame transparente qui ferme le porte-échantillon.

Une telle lame transparente pour fermer le porte-échantillon permet de plaquer l'échantillon dans le porte-échantillon, permettant ainsi une meilleure répétabilité de l'analyse microscopique. D'autre part, dans le deuxième mode de fonctionnement comprenant l'analyse microscopique ex vivo d'un échantillon, la troisième lame transparente, en combinaison avec une première lame transparente pour fermer la partie distale de la monture, permet l'utilisation d'un troisième milieu d'immersion en contact avec ladite première lame transparente et ladite troisième lame transparente, le troisième milieu d'immersion n'étant pas en contact avec l'échantillon.

Selon un ou plusieurs exemples de réalisation, une épaisseur de ladite troisième lame est sensiblement identique à une épaisseur de la deuxième lame ; avantageusement, lesdites deuxième et troisième lames présentent en outre des courbes de dispersion de l'indice de réfraction avec la longueur d'onde sensiblement identiques ce qui permet de limiter l'introduction d'écarts de dispersion et/ou de variations de chemin optique dans le cas de l'utilisation d'un système interférométrique pour l'analyse microscopique, lors du passage d'un mode de fonctionnement à l'autre.

Ainsi, selon un ou plusieurs exemples de réalisation, le dispositif comprend en outre un troisième milieu d'immersion en contact avec ladite première lame transparente et ladite troisième lame transparente qui ferme le porte-échantillon. Un troisième milieu d'immersion comprend par exemple un liquide ou un gel dont l'indice de réfraction est compris entre environ 1,3 et environ 1,5, c'est-à-dire un indice de réfraction généralement proche de celui de l'échantillon échantillon. Un troisième milieu d'immersion permet d'améliorer la qualité de l'analyse microscopique dans le cas de l'utilisation d'un objectif de microscope à immersion et de limiter les réflexions aux interfaces.

Selon un ou plusieurs exemples de réalisation, le troisième milieu d'immersion est identique au premier milieu d'immersion.

Selon un ou plusieurs exemples de réalisation, le troisième milieu d'immersion est différent du premier milieu d'immersion et présente des caractéristiques mécaniques, chimiques et/ou physiques différentes du premier milieu d'immersion. Notamment, le troisième milieu d'immersion peut présenter un troisième indice de réfraction substantiellement identique au premier indice de réfraction du premier milieu d'immersion ou présenter un indice de réfraction différent. Utiliser un troisième milieu d'immersion différent du premier milieu d'immersion permet par exemple de choisir un troisième milieu d'immersion qui facilite le passage d'un mode de fonctionnement à l'autre lorsque le premier milieu d'immersion présente des caractéristiques le rendant compliqué à être manipulé.

Selon un ou plusieurs exemples de réalisation, le troisième milieu d'immersion est différent du premier milieu d'immersion et comprend un troisième indice de réfraction sensiblement identique à l'indice de réfraction d'une surcouche transparente de l'échantillon à analyser. Selon un ou plusieurs exemples de réalisation, le troisième milieu d'immersion comprend un indice de réfraction sensiblement identique à celui de l'échantillon à analyser.

Selon un ou plusieurs exemples de réalisation, les caractéristiques physiques, indice de réfraction et/ou dispersions sont sensiblement identiques à celles du deuxième milieu d'immersion afin d'éviter une modification du chemin optique lors du passage d'un mode de fonctionnement à l'autre.

Alternativement, ladite troisième fenêtre de transmission peut comprendre une simple ouverture dans le réceptacle formé par le porte-échantillon ou le porte-échantillon peut comprendre seulement la surface de réception de l'échantillon. Dans ces cas cependant, il est toujours possible d'utiliser un troisième milieu d'immersion qui se trouvera en contact avec l'échantillon. Avantageusement on choisira dans ce cas un premier embout dans le premier mode de fonctionnement (analyse microscopique in vivo de la peau) sans lame transparente de fermeture, pour éviter des variations de chemin optique lors du changement d'un mode de fonctionnement à l'autre.

Selon un ou plusieurs exemples de réalisation, le dispositif comprend en outre un dispositif configuré pour l'éclairage de l'échantillon et agencé à une extrémité de ladite partie distale de la monture. Un tel dispositif peut comprendre des sources lumineuses, par exemple des diodes électroluminescentes, ou peut comprendre des extrémités de fibres optiques configurées pour transporter des faisceaux lumineux. Notamment, un tel dispositif d'éclairage agencé à l'extrémité de la partie distale de la monture peut rester en place dans les deux modes de fonctionnement, analyses microscopiques in vivo de la peau et ex vivo d'un échantillon. Un tel dispositif d'éclairage agencé à l'extrémité de la partie distale de la monture peut faire partie d'une voie d'éclairage de l'échantillon pour l'analyse microscopique ou peut former un éclairage de l'échantillon supplémentaire à celui d'une voie d'éclairage.

Selon un ou plusieurs exemples de réalisation, la monture est configurée pour être tenue à la main dans le premier mode de fonctionnement. Par exemple, la partie proximale de la monture comprend une poignée. Equipé d'une poignée, le dispositif permet de former une sonde manuelle ergonomique pour l'analyse microscopique in vivo de la peau.

Selon un ou plusieurs exemples de réalisation, le dispositif comprend en outre des moyens de déplacement axial de l'objectif de microscope dans la partie distale de la monture, le long de l'axe optique. Un tel déplacement est notamment prévu dans des dispositifs configurés pour la microscopie en profondeur dans l'échantillon, par exemple et de façon non limitative, la microscopie par cohérence optique avec filtrage confocal linéaire, ou LC-OCT, avec ajustement dynamique de la mise au point dans l'échantillon, dans le premier mode de fonctionnement comprenant une analyse microscopique in vivo de la peau, ou dans le deuxième mode de fonctionnement comprenant une analyse microscopique ex vivo d'un échantillon.

Selon un ou plusieurs exemples de réalisation, le dispositif comprend en outre des moyens de réglage axial du support selon une direction parallèle audit axe optique et/ou des moyens de réglage latéral du support dans un plan sensiblement perpendiculaire audit axe optique. Dans le deuxième mode de fonctionnement, la monture comprenant la partie distale dans laquelle est agencé l'objectif de microscope et la partie proximale solidaire de la partie distale est supportée par le support configuré également pour permettre l'alignement de l'axe optique de l'objectif de microscope, grâce au deuxième embout fixé à ladite partie distale de la monture avec lequel le support coopère. Des moyens de réglage axial et/ou latéral du support permettent en outre de régler la position de la monture par rapport au porte-échantillon.

Bien entendu, de tels réglages peuvent être faits alternativement, ou de façon supplémentaire, au niveau du porte-échantillon.

Ainsi, selon un ou plusieurs exemples de réalisation, le dispositif comprend en outre des moyens de réglage latéral du porte-échantillon dans un plan sensiblement perpendiculaire audit axe optique et/ou des moyens de réglage axial du porte-échantillon selon une direction parallèle audit axe optique.

Selon un ou plusieurs exemples de réalisation, le support peut être fixé à la monture par d'autres points de fixation, par exemple à une poignée agencée sur la partie proximale de la monture, pour permettre une plus grande stabilité du dispositif dans le deuxième mode de fonctionnement.

Selon un ou plusieurs exemples de réalisation, le deuxième embout comprend une surface extérieure configurée pour coopérer avec une surface dudit support pour permettre ledit alignement. La surface extérieure peut par exemple avoir différentes formes pour permettre cet auto-alignement. Elle peut-être par exemple conique ou cylindrique.

Selon un ou plusieurs exemples de réalisation, le deuxième embout est un élément à symétrie de révolution, avec une ouverture centrale.

Selon un ou plusieurs exemples de réalisation, le dispositif peut comprendre en outre des moyens de fixation du deuxième embout avec le support, par exemple le deuxième embout et le support peuvent être aimantés pour assurer la coopération mécanique des deux pièces permettant l'alignement.

Selon un ou plusieurs exemples de réalisation, le dispositif comprend en outre :
- une source d'émission d'une voie d'éclairage configurée pour éclairer l'échantillon ou la peau ; et/ou
- un détecteur d'une voie de détection comprenant ledit objectif de microscope, ledit détecteur étant configuré pour détecter un faisceau lumineux émis par l'échantillon ou la peau éclairé(e) et générer un signal de détection ;
- ladite source d'émission et/ou ledit détecteur étant agencés dans la partie proximale de la monture.

Selon un ou plusieurs exemples de réalisation, la voie d'éclairage est configurée pour éclairer l'échantillon à travers l'objectif de microscope.

Selon un ou plusieurs exemples de réalisation, le dispositif ne comprend que certains des éléments distaux des voies d'éclairage et/ou de détection, les autres éléments des voies d'éclairage et/ou de détection étant déportés à l'extérieur du dispositif.

Ainsi, pour fonctionner, le dispositif pourra être connecté à des éléments extérieurs, par exemple et de façon non limitative, un ou plusieurs des éléments suivants : source d'éclairage, détecteur, source d'énergie électrique, contrôleurs, unité de traitement, par exemple un ordinateur.

Selon un deuxième aspect, la présente description concerne un système d'analyse microscopique configuré pour l'analyse microscopique ex vivo d'un échantillon et l'analyse microscopique in vivo de la peau comprenant un dispositif selon le premier aspect.

Le système d'analyse microscopique selon le deuxième aspect comprend :
- une voie d'éclairage configurée pour éclairer l'échantillon ou la peau ;
- une voie de détection comprenant ledit objectif de microscope, ladite voie de détection étant configurée pour détecter un faisceau lumineux émis par l'échantillon ou la peau éclairé(e) et générer un signal de détection ;
- une unité de traitement configurée pour générer une information d'analyse microscopique de l'échantillon ou de la peau à partir dudit signal de détection.

Tout ou partie des éléments des voies d'éclairage et de détection peuvent être compris dans le dispositif selon le premier aspect.

Selon un ou plusieurs exemples de réalisation, la voie d'éclairage est configurée pour éclairer l'échantillon à travers l'objectif de microscope.

Selon un ou plusieurs exemples de réalisation, le système d'analyse selon le deuxième aspect est configuré pour l'imagerie confocale et/ou d'imagerie tomographique par cohérence optique, et ladite information d'analyse microscopique comprend au moins une image de l'échantillon ou de la peau.

Par exemple, le système d'analyse selon le deuxième aspect est configuré pour l'imagerie tomographique par cohérence optique telle que décrite dans l'état de l'art et est configurée pour former des images *B-Scans*, *C-Scans* (ou images *en face*) de l'échantillon ou en volume. De façon connue, une image en coupe de l'échantillon dite « *B-Scan* », est une image formée dans un plan parallèle à l'axe optique de l'objectif de microscope ; une image en coupe de l'échantillon dite *« C-Scan »,* ou image *en face*, est une image formée dans un plan perpendiculaire à l'axe optique de l'objectif de microscope, et une image 3D de l'échantillon ou image *en volume* résulte de l'acquisition d'une pluralité d'images B-Scans ou d'images C-Scans.

Selon un ou plusieurs exemples de réalisation, le système d'analyse selon le deuxième aspect est configuré pour l'analyse spectroscopique, et ladite information d'analyse microscopique comprend au moins un spectre dudit faisceau lumineux émis par l'échantillon ou la peau en au moins un point de l'échantillon ou de la peau.

Selon un troisième aspect, la présente description concerne un procédé d'analyse microscopique ex vivo d'un échantillon et d'analyse microscopique in vivo de la peau au moyen d'un système d'analyse selon le deuxième aspect, comprenant :
- la fixation dudit premier embout sur la monture et une analyse microscopique in vivo de la peau ;
- le retrait dudit premier embout, la fixation dudit deuxième embout sur la monture et une analyse microscopique ex vivo d'un échantillon.

Le procédé selon le troisième aspect peut comprendre au moins l'une des étapes suivantes, en fonction des caractéristiques du système d'analyse selon le deuxième aspect, les étapes pouvant être combinées les unes avec les autres :
- le remplissage du premier embout avant la fixation, si on utilise un deuxième milieu d'immersion ;
- le positionnement d'un troisième milieu d'immersion entre une première lame transparente configurée pour fermer la partie distale de la monture et le porte-échantillon si on utilise un troisième milieu d'immersion.

Selon un ou plusieurs exemples de réalisation, l'analyse microscopique de l'échantillon ou de la peau comprend une imagerie confocale et/ou tomographique par cohérence optique de l'échantillon ou de la peau.

Selon un ou plusieurs exemples de réalisation, l'analyse microscopique de l'échantillon ou de la peau comprend une analyse spectroscopique de l'échantillon ou de la peau.

### Brève description des figures

D'autres avantages et caractéristiques de l'invention apparaîtront à la lecture de la description, illustrée par les figures suivantes :
[Fig. 1], déjà décrite, un schéma illustrant une monture étanche pour système d'imagerie microscopique in vivo de la peau selon l'état de l'art ;
[Fig. 2A], un schéma illustrant un premier exemple d'un système d'analyse microscopique selon la présente description, lorsqu'il fonctionne dans un premier mode de fonctionnement comprenant une analyse microscopique in vivo de la peau;
[Fig. 2B], un schéma illustrant le premier exemple d'un système d'analyse microscopique selon la présente description, lorsqu'il fonctionne dans un deuxième mode de fonctionnement comprenant une analyse microscopique ex vivo d'un échantillon;
[FIG. 2C], un schéma illustrant un deuxième exemple d'un système d'analyse microscopique selon la présente description, lorsqu'il fonctionne dans le deuxième mode de fonctionnement;
[Fig. 3A], un schéma illustrant un troisième exemple d'un système d'analyse microscopique selon la présente description, lorsqu'il fonctionne dans le premier mode de fonctionnement;
[Fig. 3B], un schéma illustrant le troisième exemple d'un système d'analyse microscopique selon la présente description, lorsqu'il fonctionne dans le deuxième mode de fonctionnement;
[Fig. 4], des schémas illustrant des étapes d'un procédé d'analyse microscopique in vivo de la peau et ex vivo d'un échantillon, au moyen d'un système d'analyse selon la présente description.

### Description détaillée de l'invention

Dans la description détaillée qui suit, de nombreux détails spécifiques sont exposés afin de fournir une compréhension plus approfondie de la présente description. Cependant, il apparaîtra à l'homme du métier que la présente description peut être mise en œuvre sans ces détails spécifiques. Dans d'autres cas, des caractéristiques bien connues n'ont pas été décrites en détail pour éviter de compliquer inutilement la description.

Par ailleurs, sur les figures, les éléments ne sont pas représentés à l'échelle pour une meilleure visibilité.

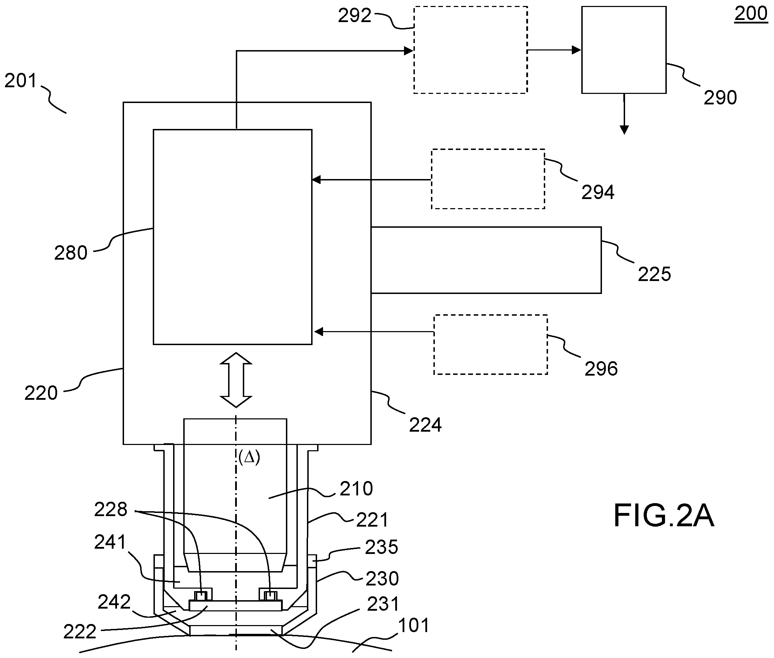

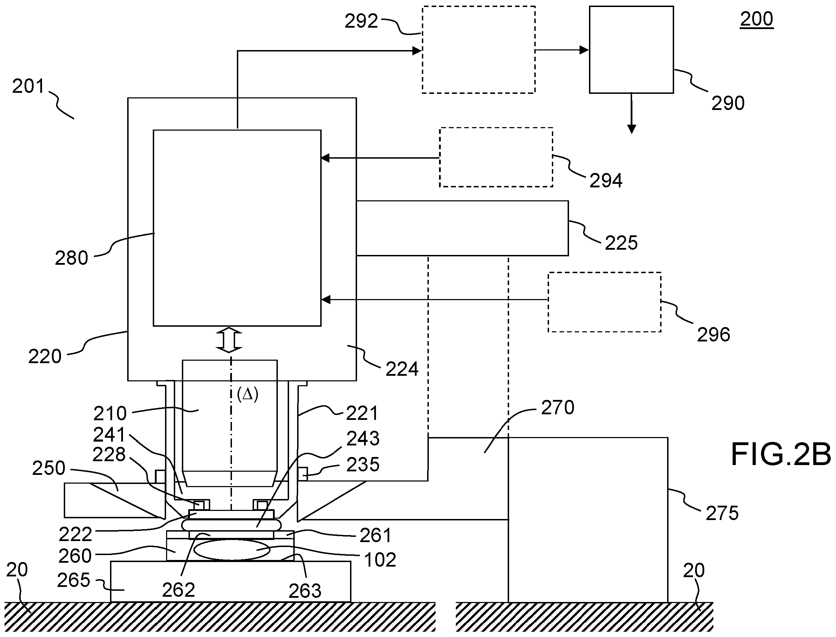

Les FIGS. 2A et 2B représentent un premier exemple d'un système d'analyse microscopique 200 selon la présente description, configuré pour l'analyse microscopique ex vivo d'un échantillon et l'analyse microscopique in vivo de la peau. La FIG. 2A représente le système d'analyse microscopique lorsqu'il fonctionne dans le premier mode de fonctionnement, à savoir une analyse microscopique in vivo de la peau, et la FIG. 2B représente le système d'analyse microscopique lorsqu'il fonctionne dans le deuxième mode de fonctionnement, à savoir une analyse microscopique ex vivo d'un échantillon.

Le système d'analyse microscopique 200 comprend un dispositif 201 pour l'analyse microscopique selon la présente description. Le dispositif 201 comprend généralement un objectif de microscope 210 comprenant un axe optique Δ, une monture 220 comprenant une partie distale 221 dans laquelle est agencé ledit objectif de microscope et une partie proximale 224 solidaire de ladite partie distale. L'objectif de microscope peut dans certains exemples de réalisation être mobile axialement dans une direction parallèle à l'axe optique. La partie proximale 224 comprend généralement au moins une partie des éléments optiques d'une voie de détection du système d'analyse microscopique et peut comprendre au moins une partie des éléments optiques d'une voie d'éclairage.

Dans l'exemple des FIGS 2A et 2B, au moins une partie des éléments optiques des voies d'éclairage et de détection agencés au sein du dispositif sont schématisés par la référence 280. Dans certains exemples de réalisation, les éléments optiques 280 peuvent comprendre de façon non limitative l'un et ou l'autre des éléments suivants : une source d'éclairage, un montage interférométrique, un détecteur, un ou plusieurs systèmes optiques permettant d'assurer des conjugaisons optiques entre plans images ou plans pupillaires, un ou plusieurs miroirs de renvoi, un ou plusieurs systèmes de balayage, etc. L'agencement de tels éléments optiques est connu par l'homme du métier et dépend de l'analyse microscopique que l'on cherche à réaliser.

Dans l'exemple des FIGS 2A et 2B, une voie d'éclairage du système d'analyse microscopique 200, configurée pour éclairer l'échantillon 102 (FIG. 2B) ou la peau 101 (FIG. 2A) à travers l'objectif de microscope 210, comprend par exemple une source d'éclairage 294, par exemple une source laser, agencée à l'extérieur du dispositif 201. Par ailleurs, une voie de détection du système d'analyse microscopique 200, configurée pour détecter un faisceau lumineux émis par l'échantillon ou la peau éclairé(e) et générer un signal de détection, et comprenant également l'objectif de microscope 210, comprend par exemple un détecteur 292, par exemple une caméra, également agencée à l'extérieur du dispositif 201. Dans l'exemple des FIGS 2A et 2B, le système d'analyse microscopique 200 comprend également une unité de traitement 290 configurée pour générer une information d'analyse microscopique de l'échantillon ou de la peau à partir du signal de détection et, optionnellement, un ou plusieurs contrôleurs 296 pour le contrôle des éléments optiques agencés dans la partie proximale du dispositif 201. Le ou les contrôleurs sont par exemple des cartes électroniques configurées pour contrôler un déplacement axial de l'objectif de microscope 110 le cas échéant, ou des miroirs d'un système de balayage, etc.

Le ou les contrôleurs, ainsi que la source 294, peuvent eux-mêmes être commandés par l'unité de traitement 290.

Lorsque le système d'analyse 200 est configuré pour l'imagerie confocale et/ou l'imagerie tomographique par cohérence optique, ladite information d'analyse microscopique comprend au moins une image de l'échantillon ou de la peau. Lorsque le système d'analyse 200 est configuré pour l'analyse spectroscopique, ladite information d'analyse microscopique comprend au moins un spectre dudit faisceau lumineux émis par l'échantillon ou la peau en au moins un point de l'échantillon ou de la peau.

A noter que dans d'autres exemples de réalisation, la source d'éclairage de la voie d'éclairage et/ou le détecteur de la voie de détection peuvent être intégrés dans la partie proximale 224 de la monture 220, avec les éléments optiques 280.

Dans d'autres exemples de réalisation, la voie d'éclairage peut ne pas comprendre l'objectif de microscope, l'éclairage de l'échantillon pour l'analyse microscopique se faisant directement au niveau d'un dispositif d'éclairage 228 agencé dans la partie distale de la monture. Un tel dispositif d'éclairage peut comprendre des sources d'éclairage, par exemple de type diodes électroluminescentes, ou des extrémités de fibres optiques configurées pour le transport de faisceau d'éclairage.

La FIG. 2A représente le système d'analyse microscopique 200 dans un fonctionnement d'analyse microscopique in vivo de la peau, référencée 101 sur la FIG. 2A.

Comme cela est visible sur la FIG. 2A, la partie distale 221 de la monture 220 comprend à une extrémité une première fenêtre de transmission fermée par une première lame transparente 222. Le dispositif 201 comprend par ailleurs un premier embout 230 fixé à la partie distale 221 de la monture 220. Le premier embout est monté de manière amovible, par exemple positionné au moyen d'une butée 235 formée dans la partie distale 221 de la monture. Par exemple, le premier embout est vissé, et la butée 235 peut être formée d'un contre-écrou. Dans des exemples de réalisation, la position de la butée peut être ajustée sur la partie distale de la monture.

Dans l'exemple de la FIG. 2A, le premier embout 230 comprend à une extrémité une deuxième fenêtre de transmission fermée par une deuxième lame transparente 231.

Le dispositif 201 comprend également un premier milieu d'immersion 241, liquide ou gel, en contact avec la première lame transparente 222 et l'objectif de microscope 210 et un deuxième milieu d'immersion 242, liquide ou gel, en contact avec la première lame transparente 222 et la deuxième lame transparente 231.

L'agencement original tel qu'illustré sur la FIG. 2A avec le premier embout 230 fixé sur la partie distale 221 de la monture permet, dans le cadre de l'utilisation d'un objectif de microscope 210 à immersion, de scinder l'immersion en deux parties. Notamment, le premier milieu d'immersion 241 et deuxième milieu d'immersion 242 peuvent présenter des caractéristiques différentes, par exemple des caractéristiques mécaniques, chimiques et/ou physiques, notamment indice de réfraction et/ou dispersion, différentes.

Une immersion en deux parties avec des milieux d'immersion différents peut par exemple être utile dans un cas où l'objectif de microscope est conçu pour être immergé dans un milieu d'immersion 241 dont les caractéristiques sont proches de celles de la peau, mais où le premier milieu d'immersion 241 présente par ailleurs des caractéristiques (notamment mécaniques ou chimiques) le rendant compliqué ou dangereux à la manipulation par un utilisateur du dispositif. Un deuxième milieu d'immersion 242 différent peut alors être utilisé, ce deuxième milieu d'immersion devant être manipulé par l'utilisateur pour passer d'un mode de fonctionnement à l'autre.

Une immersion en deux parties avec des milieux d'immersion différents peut également être utile dans le cas où le premier milieu d'immersion 241 présente des caractéristiques physicochimiques rendant difficile la désolidarisation de la partie distale 221 de la monture et du premier embout 230 en mode d'utilisation in vivo (premier milieu d'immersion 241 trop collant, par exemple).

Lorsqu'un deuxième liquide d'immersion est utilisé, le premier embout peut être fixé de façon étanche sur la partie distale de la monture, par exemple au moyen d'un joint d'étanchéité prévu sur l'une et/ou l'autre des deux pièces.

A noter que la fenêtre de transmission du premier embout peut aussi être constituée d'une simple ouverture. Il sera néanmoins possible d'utiliser un objectif de microscope 210 configuré pour fonctionner en immersion grâce à la cuve formée par la partie distale 221 de la monture fermée par la lame 222. Dans ce cas, le milieu d'immersion de la peau sera l'air. Comme illustré sur la FIG. 2A, la partie distale 221 de la monture peut également intégrer des éléments utiles au fonctionnement du système et qui nécessitent d'être proches de la peau ou de l'échantillon à analyser, comme par exemple un dispositif d'éclairage 228. Le dispositif d'éclairage 228 pourra rester en place lors du changement dans le mode de fonctionnement d'analyse microscopique ex vivo (FIG. 2B).

La FIG. 2B représente le système d'analyse microscopique 200 lorsqu'il fonctionne dans un deuxième fonctionnement, à savoir l'analyse microscopique ex vivo d'un échantillon, référencé 102 sur la FIG. 2B.

Comme cela est visible sur la FIG. 2B, le dispositif 201 comprend, pour ce mode de fonctionnement, un deuxième embout 250 fixé à ladite partie distale 221 de la monture 220 à la place du premier embout 230 (FIG. 2A). Dans cet exemple, le deuxième embout est une pièce avec une symétrie de révolution qui comprend une ouverture centrale. Le deuxième embout 250 est par exemple positionné au moyen de la butée 235. Par exemple le deuxième embout est vissé et la butée 235 peut être formée d'un contre-écrou.

Le dispositif 201 comprend par ailleurs un porte-échantillon 260 comprenant une surface de réception 263 configurée pour recevoir l'échantillon 102 et un support 270. Le support 270 coopère avec le deuxième embout 250 de manière à recevoir la monture 220 de telle sorte que l'axe optique de l'objectif de microscope soit sensiblement aligné avec une direction prédéterminée par rapport à la surface de réception, par exemple une direction sensiblement perpendiculaire à la surface de réception. Plus précisément dans cet exemple, l'alignement de l'axe optique est obtenu en faisant coopérer une surface extérieure du deuxième embout 250 avec une surface dudit support 270. Dans cet exemple, les formes des surfaces qui coopèrent sont coniques.

Dans des exemples de réalisation (non représentés sur les figures), le dispositif peut comprendre un système de réglage fin de l'alignement de l'axe optique de l'objectif de microscope, pour affiner le réglage après l'auto-alignement obtenu grâce à la coopération du deuxième embout 250 et du support 270.

Par exemple, comme cela est illustré sur la FIG. 2B, le dispositif 201 comprend en outre des moyens (optionnels) 275 de réglage axial du support 270 selon une direction parallèle à l'axe optique Δ et/ou des moyens de réglage latéral du support dans un plan sensiblement perpendiculaire à l'axe optique. Le dispositif peut comprendre également des moyens (optionnels) 265 de réglage latéral du porte-échantillon dans un plan sensiblement perpendiculaire audit axe optique et/ou des moyens de réglage axial du porte-échantillon selon une direction parallèle audit axe optique. Ces moyens de réglage visent, en fonctionnement, à ajuster la position relative de l'objectif de microscope 210 et de l'échantillon. Notamment, le réglage axial permet d'assurer que la partie de l'échantillon dont on souhaite faire l'analyse microscopique est positionnée à la distance de travail requise de l'objectif de microscope.

Dans l'exemple de la FIG. 2B, les moyens de réglage 265 et 275 sont solidaire d'une même plateforme 20 qui peut faire partie ou non du dispositif 201.

Les moyens de réglage 265 et/ou 275 peuvent eux-mêmes être commandés par l'unité de traitement 290.

De manière générale, le support 270 peut être configuré pour supporter seul la monture 220 au moyen du deuxième embout 250. Cependant, pour renforcer la stabilité du dispositif, en opération, il est possible de prévoir d'autres point de fixation du support 270 avec la monture 220. Ainsi on pourra par exemple, une fois positionné la monture 220 sur le support 270, fixer le support 270 à la poignée 225 du dispositif 201, comme cela est schématisé avec des pointillés sur la FIG. 2B.

Comme illustré sur la FIG. 2B, le porte échantillon 260 comprend un réceptacle avec une troisième fenêtre de transmission fermée par une troisième lame transparente 262. La troisième lame transparente est par exemple agencée dans un couvercle 261 du porte-échantillon. Par exemple, une épaisseur de la troisième lame transparente 262 est sensiblement identique à une épaisseur de la deuxième lame transparente 231. Avec des épaisseurs de lame sensiblement identiques, on limite les effets d'écarts de dispersion et de variations de chemin optique, en passant d'un mode de fonctionnement à l'autre, notamment dans le cas où l'analyse microscopique utilise un système interférométrique.

La troisième lame transparente 262 permet de plaquer l'échantillon dans le porte-échantillon, permettant ainsi une meilleure répétabilité de l'analyse microscopique. D'autre part, comme illustré sur la FIG. 2B, la troisième lame transparente 262, en combinaison avec l'utilisation de la première lame transparente 222 pour fermer la partie distale 221 de la monture, permet l'utilisation d'un troisième milieu d'immersion 243 en contact avec la première lame transparente 222 et la troisième lame transparente 262, sans que le troisième milieu d'immersion 243 soit en contact avec l'échantillon 102, ce qui peut s'avérer gênant.

Le troisième milieu d'immersion 243 comprend par exemple un liquide ou un gel dont l'indice de réfraction est compris entre environ 1,3 et environ 1,5, c'est-à-dire un indice de réfraction généralement proche de celui de l'échantillon. Le troisième milieu d'immersion 243 permet d'améliorer la qualité de l'analyse microscopique dans le cas de l'utilisation d'un objectif de microscope à immersion et de limiter les réflexions aux interfaces.

Le troisième milieu d'immersion peut être identique au premier milieu d'immersion 241 ou présenter des caractéristiques mécaniques, chimiques et/ou physiques différentes du premier milieu d'immersion. Notamment, le troisième milieu d'immersion peut présenter un troisième indice de réfraction substantiellement identique au premier indice de réfraction du premier milieu d'immersion ou présenter un indice de réfraction différent. Dans le mode de fonctionnement d'analyse microscopique ex vivo tel que représenté sur la FIG. 2B, une immersion en deux parties avec des milieux d'immersion 241, 243 différents peut être utile dans le cas où le premier milieu d'immersion 241 présente des caractéristiques physicochimiques rendant difficile la désolidarisation de la partie distale 221 de la monture et du porte échantillon 260, par exemple parce que le premier milieu d'immersion 241 est trop collant.

Une immersion en deux parties avec des milieux d'immersion 241, 243 différents est également utile si le premier milieu d'immersion 241 présente des caractéristiques rendant difficile l'interfaçage de la partie distale de la monture avec le porte échantillon 260, par exemple du fait d'une tension superficielle insuffisante pour placer une goutte qui va se maintenir pour respecter une distance de travail suffisante.

Par ailleurs, il peut arriver que certains échantillons dont on cherche à faire une analyse microscopique soient conditionnés avec une surcouche d'un milieu transparent, qui peut être différent du premier milieu d'immersion 241 et d'épaisseur variable. Dans ce cas, on peut utiliser un troisième milieu d'immersion dont les caractéristiques physiques, par exemple indice de réfraction et/ou dispersion, sont sensiblement identiques au milieu de la surcouche, et adapter l'épaisseur du troisième milieu d'immersion à l'épaisseur de la surcouche pour limiter la variation du chemin optique lors du passage d'un mode de fonctionnement à un autre. Ceci est particulièrement important lorsque le système d'analyse microscopique comprend un interféromètre avec un bras de référence fixe par exemple.

Dans l'exemple de la FIG. 2B, l'alignement de l'axe optique est obtenu en faisant coopérer une surface extérieure conique du deuxième embout 250 avec une surface conique dudit support 270.

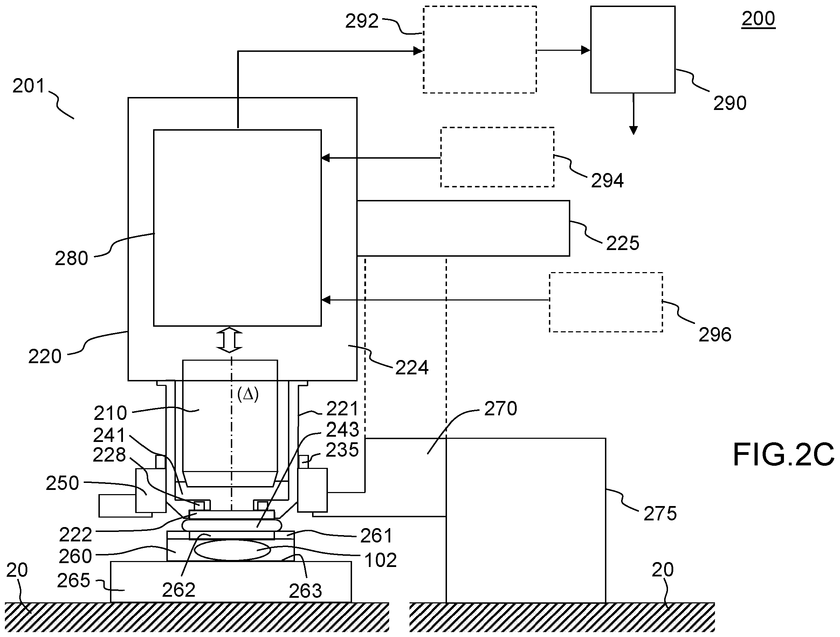

La FIG. 2C montre un autre exemple de réalisation dans lequel une surface extérieure cylindrique du deuxième embout 250 coopère avec une surface cylindrique du support 270. Bien entendu, d'autres modes de réalisation peuvent être envisagée par l'homme du métier pour obtenir un auto-alignement de l'axe optique grâce à la coopération du deuxième embout 250 et du support 270, et notamment pour faire coopérer une surface extérieure du deuxième embout 250 avec une surface du support 270 de telle sorte à permettre l'alignement de l'axe optique de l'objectif de microscope 210 dans une direction prédéterminée par rapport à la surface de réception 263. Ainsi par exemple, une surface peut être équipé d'un système de roulement (par exemple des billes) configurées pour se loger dans des rainures de l'autre surface, ou tout autre moyen connu de l'homme du métier.

Par ailleurs, le dispositif peut comprendre en outre des moyens de fixation du deuxième embout avec le support, moyens non représentés sur les FIGS 2B, 2C, par exemple le deuxième embout et le support peuvent être aimantés pour assurer la coopération mécanique des deux pièces permettant l'alignement.

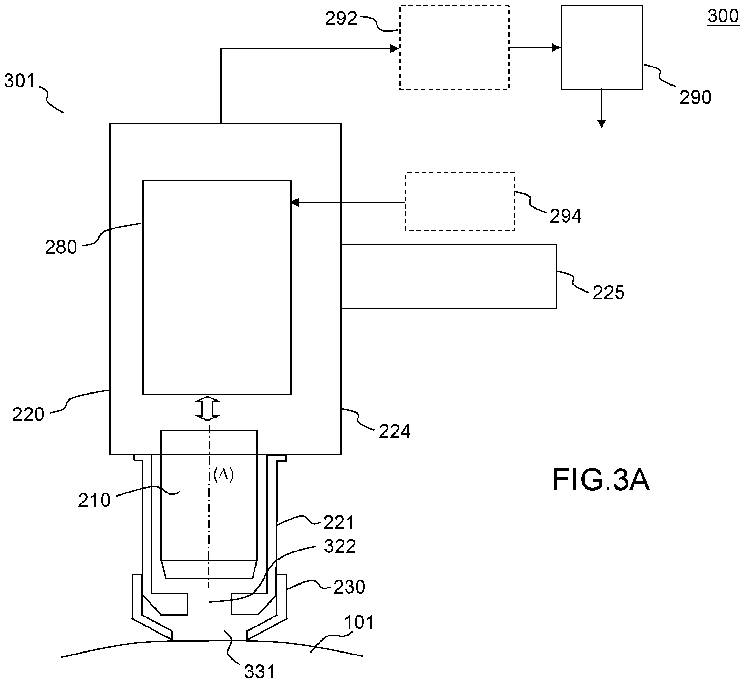

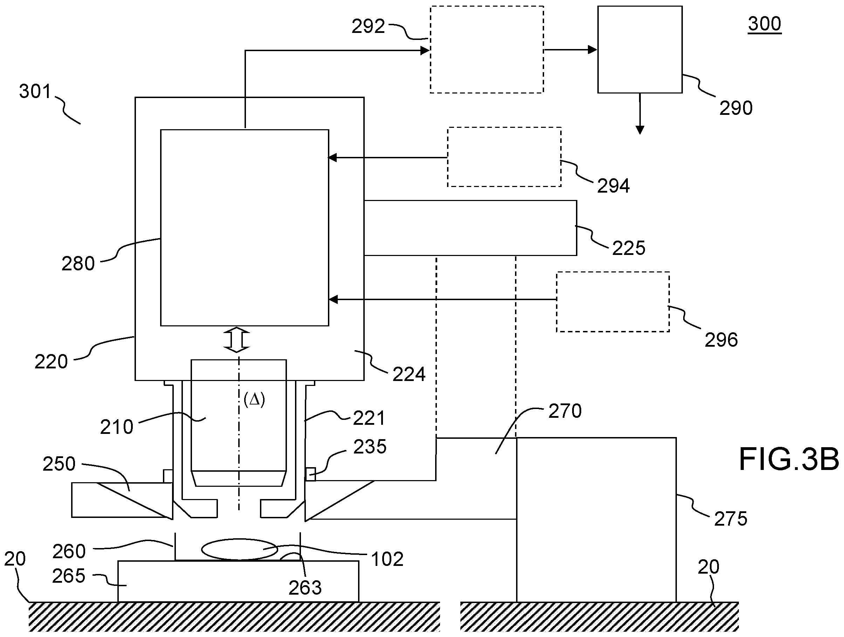

Les FIGS. 3A et 3B représentent un deuxième exemple d'un système d'analyse microscopique 200 selon la présente description, configuré pour l'analyse microscopique ex vivo d'un échantillon et l'analyse microscopique in vivo de la peau. La FIG. 3A représente le système d'analyse microscopique dans un premier mode de fonctionnement d'analyse microscopique in vivo de la peau et la FIG. 3B représente le système d'analyse microscopique dans un deuxième mode de fonctionnement d'analyse microscopique ex vivo d'un échantillon.

Les éléments des FIGS 3A et 3B similaires à ceux des FIGS 2A et 2B sont référencés de façon identique et ne sont pas décrits à nouveau.

Comme cela est visible sur la FIG. 3A, dans cet exemple de réalisation et à la différence de la FIG. 2A, la partie distale 221 de la monture 220 comprend une fenêtre de transmission formée d'une simple ouverture 322. De la même manière, le premier embout 230 comprend une fenêtre de transmission constituée d'une simple ouverture 331. Ainsi dans cet exemple, l'objectif de microscope et la peau sont immergés dans l'air. La partie distale 221 permet dans cet exemple de protéger l'objectif de microscope 210, notamment lors du changement du premier mode de fonctionnement d'analyse microscopique in vivo au deuxième mode de fonctionnement d'analyse microscopique ex vivo, changement lors duquel un opérateur retire le premier embout pour positionner le deuxième embout (250, FIG. 3B). Par ailleurs,

La partie distale 221 peut intégrer un dispositif d'éclairage, comme précédemment décrit au moyen des FIGS 2A - 2C.

Par ailleurs, comme cela est visible sur la FIG. 3B, le porte-échantillon 260 peut également ne pas être fermé par une lame transparente.

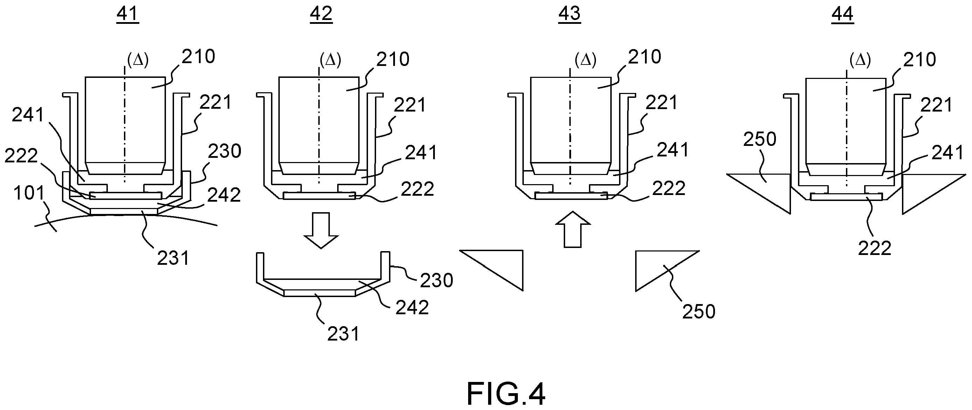

La FIG. 4 représente des schémas illustrant des étapes d'un procédé d'analyse microscopique in vivo de la peau et ex vivo d'un échantillon, au moyen d'un système d'analyse selon la présente description. Sur la FIG. 4, seule la partie distale du dispositif est représentée. Par ailleurs, le dispositif représenté est celui illustré sur les FIGS. 2A, 2B mais bien entendu, le procédé illustré au moyen de la FIG. 4 peut s'appliquer à d'autres exemples de réalisation. Comme illustré sur la FIG. 4, le procédé d'analyse microscopique comprend la fixation 41 du premier embout 230 sur la monture 220 et une analyse microscopique in vivo de la peau, puis le retrait 42 du premier embout 230 et la fixation (étapes 43, 44) du deuxième embout 250 sur la monture 220. Le dispositif avec le deuxième embout 250 peut alors être monté sur le support (270, FIG. 2B) afin de procéder à l'analyse microscopique ex vivo d'un échantillon. Le dispositif peut ensuite à nouveau être utilisé pour l'analyse microscopique in vivo de la peau en retirant le deuxième embout et en le remplaçant par un premier embout. A noter qu'en pratique, le premier embout peut être un consommable qui sera changé pour chaque nouvelle utilisation in vivo.

La FIG. 4 illustre comment, grâce au dispositif selon la présente description, un auto-alignement de l'axe optique de l'objectif de microscope peut être obtenu lors du passage du premier mode de fonctionnement d'analyse microscopique in vivo au deuxième mode de fonctionnement d'analyse microscopique ex vivo.

La FIG. 4 montre également un avantage de la présence du premier embout 230 fixé sur la partie distale 221 de la monture. En effet, grâce à la présence de la partie distale, lors du retrait du premier embout pour fixer le deuxième embout 250, l'objectif de microscope 210 est protégé.

Par ailleurs, dans le cas d'un objectif de microscope 210 à immersion, comme illustré sur la FIG. 4, l'étanchéité est assurée grâce à la partie distale 221 de la monture fermée par la fenêtre transparente 222 et qui reste en place lors du retrait du premier embout 230 pour mettre en place le deuxième embout 250.

Pour l'analyse microscopique in vivo de la peau, le premier embout 230 est utilisé comme un « bouchon » qu'il suffit de remplir avec le deuxième milieu d'immersion 242, liquide ou gel. Le premier embout peut être fixé de manière étanche à la partie distale de la monture.

Pour l'analyse microscopique ex vivo d'un échantillon, un troisième liquide d'immersion (non représenté sur la FIG. 4) peut être agencé entre le porte-échantillon, et la lame transparente 222.

Par exemple, pour des échantillons conditionnés avec une surcouche d'un milieu transparent différent du premier milieu d'immersion 24, on pourra choisir un troisième milieu d'immersion dont les caractéristiques physiques, par exemple indice de réfraction et/ou dispersion, sont sensiblement identiques au milieu de la surcouche, et adapter l'épaisseur du troisième milieu d'immersion à l'épaisseur de la surcouche pour limiter la variation du chemin optique lors du passage d'un mode de fonctionnement à un autre.

Bien que décrite à travers un certain nombre d'exemples de réalisation, les dispositifs et procédés selon la présente description comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

### Références

Réf. 1: M. Rajadhyaksha et al, « In vivo confocal scanning laser microscopy of human skin II: Advances in instrumentationand comparison with histology », J Invest Dermatol, 1999.
Réf 2: K. König et al, "High-resolution multiphoton tomography of human skin with subcellular spatial resolution and picosecond time resolution," J. Biomed. Opt. 8, 432-439 (2003).
Réf. 3: Schmitt et al., "Subsurface Imaging of Living Skin with Optical Coherence Microscopy", Dermatology 1995;191:93-98.
Réf. 4: Demande de brevet publiée WO2015092019.
Réf 5: Y. Chen et al. « High-resolution line-scanning optical coherence microscopy", Optics Letters, Vol. 32, N°14, 1971 - 1973 (2007).
Réf 6: J. Schleusener et al., "Raman spectroscopy for the discrimination of cancerous and normal skin", Photon Lasers Med (2015).
Réf 7: E. Drakaki et al. "Spectroscopie methods for the photodiagnosis of nonmelanoma skincancer", Journal of Biomedical Optics 18(6), 061221 (June 2013).
Réf 8: Demande de brevet publiée WO2019138062.
Réf. 9 : EP 3 018 518
Réf. 10 : WO 2016/083003
Réf. 11 : DE 10 2009 044 413
Réf. 12 : Brevet US10514532

## Revendications

1. Dispositif (201, 301) configuré pour fonctionner dans un premier mode de fonctionnement comprenant une analyse microscopique in vivo de la peau et dans un deuxième mode de fonctionnement comprenant une analyse microscopique ex vivo d'un échantillon, le dispositif comprenant :
- un objectif de microscope (210) comprenant un axe optique (Δ);
- une monture (220) comprenant une partie distale (221) dans laquelle est agencé ledit objectif de microscope et une partie proximale (224) solidaire de ladite partie distale, ladite partie distale (221) comprenant à une extrémité une première fenêtre de transmission;
- un premier embout (230) comprenant à une extrémité une deuxième fenêtre de transmission et configuré pour être fixé de manière amovible, dans ledit premier mode de fonctionnement, à ladite partie distale (221) de la monture (220) ;
- un deuxième embout (250) configuré pour être fixé de manière amovible, dans ledit deuxième mode de fonctionnement, à ladite partie distale (221) de la monture (220) ;
- un porte-échantillon (260) comprenant une surface de réception (263) configurée pour recevoir un échantillon dans le deuxième mode de fonctionnement;
- un support (270) configuré pour coopérer avec le deuxième embout (250) dans le deuxième mode de fonctionnement, de manière à recevoir ladite monture (220) de telle sorte que l'axe optique de l'objectif de microscope soit sensiblement aligné dans une direction prédéterminée par rapport à la surface de réception.

2. Dispositif selon la revendication 1, dans lequel ladite première fenêtre de transmission comprend une première lame transparente (222) qui ferme ladite extrémité de la partie distale (221) de la monture.

3. Dispositif selon la revendication 2, comprenant en outre un premier milieu d'immersion (241) en contact avec ladite première lame transparente et ledit objectif de microscope (210).

4. Dispositif selon l'une quelconque des revendications précédentes, dans lequel ladite deuxième fenêtre de transmission comprend une deuxième lame transparente (231) qui ferme ladite extrémité du premier embout (230).

5. Dispositif selon la revendication 4, dans lequel
- ladite première fenêtre de transmission comprend une première lame transparente (222) qui ferme ladite extrémité de la partie distale (221) de la monture ; et
- le dispositif comprend en outre un deuxième milieu d'immersion (242) en contact avec ladite première lame transparente (222) et ladite deuxième lame transparente (231).

6. Dispositif selon l'une quelconque des revendications précédentes, dans lequel le porte-échantillon comprend une troisième lame transparente (262) qui ferme le porte-échantillon.

7. Dispositif selon la revendication 6, dans lequel
- ladite première fenêtre de transmission comprend une première lame transparente (222) qui ferme ladite partie distale (221) de la monture ; et
- le dispositif comprend en outre un troisième milieu d'immersion (243) en contact avec ladite première lame transparente (222) et ladite troisième lame transparente (262).

8. Dispositif selon l'une quelconque des revendications précédentes, comprenant en outre un dispositif (228) configuré pour l'éclairage de l'échantillon et agencé à une extrémité de ladite partie distale (221) de la monture.

9. Dispositif selon l'une quelconque des revendications précédentes, dans lequel la monture (220) est configurée pour être tenue à la main dans le premier mode de fonctionnement.

10. Dispositif selon l'une quelconque des revendications précédentes, comprenant en outre des moyens de déplacement axial de l'objectif de microscope (210) dans la partie distale (221) de la monture, le long de l'axe optique (Δ).

11. Dispositif selon l'une quelconque des revendications précédentes, comprenant en outre des moyens (275) de réglage axial du support (270) selon une direction parallèle audit axe optique (Δ) et/ou des moyens de réglage latéral du support dans un plan sensiblement perpendiculaire audit axe optique et/ou des moyens (265) de réglage latéral du porte-échantillon dans un plan sensiblement perpendiculaire audit axe optique et/ou des moyens de réglage axial du porte-échantillon selon une direction parallèle audit axe optique.

12. Dispositif selon l'une quelconque des revendications précédentes, dans lequel le deuxième embout (250) comprend une surface extérieure configurée pour coopérer avec une surface dudit support (270) pour permettre ledit alignement.

13. Système d'analyse microscopique (200) configuré pour fonctionner dans un premier mode de fonctionnement comprenant une analyse microscopique in vivo de la peau et dans un deuxième mode de fonctionnement comprenant une analyse microscopique ex vivo d'un échantillon, le système comprenant :
- un dispositif selon l'une quelconque des revendications 1 à 12;
- une voie d'éclairage configurée pour éclairer l'échantillon ou la peau;
- une voie de détection comprenant ledit objectif de microscope, ladite voie de détection étant configurée pour détecter un faisceau lumineux émis par l'échantillon ou la peau éclairé(e) et générer un signal de détection;
- une unité de traitement (290) configurée pour générer une information d'analyse microscopique de l'échantillon ou de la peau à partir dudit signal de détection ; et dans lequel
- tout ou partie des éléments des voies d'éclairage et de détection sont compris dans ledit dispositif.

14. Système d'analyse selon la revendication 13, configuré pour l'imagerie confocale et/ou d'imagerie tomographique par cohérence optique, dans lequel ladite information d'analyse microscopique comprend au moins une image de l'échantillon ou de la peau et/ou configuré pour l'analyse spectroscopique, dans lequel ladite information d'analyse microscopique comprend au moins un spectre dudit faisceau lumineux émis par l'échantillon ou la peau en au moins un point de l'échantillon ou de la peau.

15. Procédé d'analyse microscopique ex vivo d'un échantillon et d'analyse microscopique in vivo de la peau au moyen d'un système d'analyse selon la revendication 13, comprenant :
- le retrait dudit deuxième embout (250), la fixation dudit premier embout (230) sur la monture (220) et une analyse microscopique in vivo de la peau ;
- le retrait dudit premier embout (230), la fixation dudit deuxième embout (250) sur la monture (220) et une analyse microscopique ex vivo d'un échantillon.

16. Procédé d'analyse d'un échantillon selon la revendication 15, dans lequel l'analyse microscopique de l'échantillon ou de la peau comprend une imagerie confocale et/ou tomographique par cohérence optique de l'échantillon ou de la peau et/ou comprend une analyse spectroscopique de l'échantillon ou de la peau.

## Patentansprüche

1. Vorrichtung (201, 301), die konfiguriert ist, um in einem ersten Funktionsmodus, der eine in vivo mikroskopische Analyse der Haut aufweist, und in einem zweiten Funktionsmodus, der eine ex vivo mikroskopische Analyse einer Probe aufweist, zu funktionieren, wobei die Vorrichtung aufweist:
- ein Mikroskopobjektiv (210), das eine optische Achse (D) aufweist;
- eine Halterung (220), die ein distales Teil (221, in dem das Mikroskopobjektiv angeordnet ist, und ein proximales Teil (224, das mit dem distalen Teil fest verbunden ist, aufweist, wobei das distale Teil (221) an einem Ende ein erstes Transmissionsfenster aufweist;
- ein erstes Endstück (230), das an einem Ende ein zweites Transmissionsfenster aufweist und konfiguriert ist, um in dem ersten Funktionsmodus abnehmbar an dem distalen Teil (221) der Halterung (220) befestigt zu werden;
- ein zweites Endstück (250), das konfiguriert ist, um in dem zweiten Funktionsmodus abnehmbar an dem distalen Teil (221) der Halterung (220) befestigt zu werden;
- einen Probenhalter (260), der eine Aufnahmefläche (263) aufweist, die konfiguriert ist, um in dem zweiten Funktionsmodus eine Probe aufzunehmen;
- einen Träger (270), der konfiguriert ist, um mit dem zweiten Endstück (250) in dem zweiten Funktionsmodus zusammenzuwirken, um die Halterung (220) so aufzunehmen, dass die optische Achse des Mikroskopobjektivs im Wesentlichen in einer vorbestimmten Richtung in Bezug auf die Aufnahmefläche ausgerichtet ist.

2. Vorrichtung nach Anspruch 1, wobei das erste Transmissionsfenster eine erste transparente Lamelle (222) aufweist, die das Ende des distalen Teils (221) der Halterung verschließt.

3. Vorrichtung nach Anspruch 2, die ferner ein erstes Immersionsmedium (241) aufweist, das mit der ersten transparenten Lamelle und dem Mikroskopobjektiv (210) in Kontakt steht.

4. Vorrichtung nach einem der vorhergehenden Ansprüche, wobei das zweite Transmissionsfenster eine zweite transparente Lamelle (231) aufweist, die das Ende des ersten Endstücks (230) verschließt.

5. Vorrichtung nach Anspruch 4, wobei
- das erste Transmissionsfenster eine erste transparente Lamelle (222) aufweist, die das Ende des distalen Teils (221) der Halterung verschließt; und
- die Vorrichtung ferner ein zweites Immersionsmedium (242) aufweist, das mit der ersten transparenten Lamelle (222) und der zweiten transparenten Lamelle (231) in Kontakt steht.

6. Vorrichtung nach einem der vorhergehenden Ansprüche, wobei der Probenhalter eine dritte transparente Lamelle (262) aufweist, die den Probenhalter verschließt.

7. Vorrichtung nach Anspruch 6, wobei
- das erste Transmissionsfenster eine erste transparente Lamelle (222) aufweist, die den distalen Teil (221) der Halterung verschließt; und
- die Vorrichtung ferner ein drittes Immersionsmedium (243) aufweist, das mit der ersten transparenten Lamelle (222) und der dritten transparenten Lamelle (262) in Kontakt steht.

8. Vorrichtung nach einem der vorhergehenden Ansprüche, ferner aufweisend eine konfigurierte Beleuchtungsvorrichtung (228) für die Probe, die an einem Ende des distalen Teils (221) der Halterung angeordnet ist.

9. Vorrichtung nach einem der vorhergehenden Ansprüche, wobei die Halterung (220) konfiguriert ist, um im ersten Funktionsmodus in der Hand gehalten zu werden.

10. Vorrichtung nach einem der vorhergehenden Ansprüche, ferner aufweisend eine Einrichtung zum axialen Verschieben des Mikroskopobjektivs (210) im distalen Teil (221) der Halterung entlang der optischen Achse (D).

11. Vorrichtung nach einem der vorhergehenden Ansprüche, welche ferner Mittel (275) zur axialen Einstellung des Trägers (270) in einer Richtung parallel zur optischen Achse (D) aufweist und/oder Mittel zur seitlichen Einstellung des Trägers in einer Ebene, die im Wesentlichen senkrecht zur optischen Achse verläuft und/oder Mittel (265) zur seitlichen Einstellung des Probenhalters in einer Ebene, die im Wesentlichen senkrecht zur optischen Achse verläuft und/oder Mittel zur axialen Einstellung des Probenhalters in einer Richtung parallel zur optischen Achse aufweist.

12. Vorrichtung nach einem der vorhergehenden Ansprüche, wobei das zweite Endstück (250) eine Außenfläche aufweist, die konfiguriert ist, um mit einer Oberfläche des Trägers (270) zusammenzuwirken, um die Ausrichtung zu ermöglichen.

13. Mikroskopieanalysesystem (200), das konfiguriert ist, um in einem ersten Funktionsmodus, der eine in vivo mikroskopische Analyse der Haut aufweist, und in einem zweiten Funktionsmodus, der eine ex vivo mikroskopische Analyse einer Probe aufweist, zu funktionieren, wobei das System aufweist:
- eine Vorrichtung nach einem der Ansprüche 1 bis 12;
- eine Beleuchtungsstrecke, die konfiguriert ist, um die Probe oder die Haut zu beleuchten;
- eine Detektionsstrecke, die das Mikroskopobjektiv aufweist, wobei die Detektionsstrecke konfiguriert ist, um einen von der beleuchteten Probe oder Haut emittierten Lichtstrahl zu erfassen und ein Detektionssignal zu erzeugen;
- eine Verarbeitungseinheit (290), die konfiguriert ist, um mikroskopische Analyseinformationen der Probe oder der Haut aus dem Detektionssignal zu erzeugen; und wobei
- alle oder einige der Elemente der Beleuchtungsstrecke und der Detektionsstrecke in der Vorrichtung aufweisen.

14. Analysesystem nach Anspruch 13, konfiguriert für konfokale Bildgebung und/oder optische Kohärenztomographie-Bildgebung, wobei die mikroskopische Analyseinformation mindestens ein Bild der Probe oder der Haut aufweist, und/oder konfiguriert für spektroskopische Analyse, wobei die mikroskopische Analyseinformation mindestens ein Spektrum des Lichtstrahls aufweist, der von der Probe oder der Haut an mindestens einem Punkt der Probe oder der Haut emittiert wird.

15. Verfahren zur ex vivo mikroskopischen Analyse einer Probe und zur in vivo mikroskopischen Analyse der Haut mittels eines Analysesystems nach Anspruch 13, aufweisend:
- Entfernen des zweiten Endstücks (250), Befestigen des ersten Endstücks (230) an der Halterung (220) und mikroskopische in vivo Analyse der Haut ;
- Entfernen des ersten Endstücks (230), Befestigen des zweiten Endstücks (250) an der Halterung (220) und mikroskopische Ex vivo Analyse einer Probe.

16. Verfahren zur Analyse einer Probe nach Anspruch 15, wobei die mikroskopische Analyse der Probe oder der Haut eine konfokale und/oder tomographische Abbildung der Probe oder der Haut mittels optischer Kohärenz aufweist und/oder eine spektroskopische Analyse der Probe oder der Haut aufweist.

## Claims

1. A device (201, 301) which is configured to operate in a first operating mode comprising an in vivo microscopic analysis of the skin and in a second operating mode comprising ex vivo microscopic analysis of a sample, the device comprising:
- a microscope lens (210) comprising an optical axis (Δ);
- a mounting (220) comprising a distal portion (221), in which the microscope lens is arranged, and a proximal portion (224) which is fixedly joined to the distal portion, the distal portion (221) comprising at one end a first transmission window;
- a first end piece (230) which comprises at one end a second transmission window and which is configured to be fixed in a removable manner, in the first operating mode, to the distal portion (221) of the mounting (220);
- a second end piece (250) which is configured to be fixed in a removable manner, in the second operating mode, to the distal portion (221) of the mounting (220);
- a sample carrier (260) comprising a receiving surface (263) which is configured to receive a sample in the second operating mode;
- a support (270) which is configured to cooperate with the second end piece (250) in the second operating mode so as to receive the mounting (220) so that the optical axis of the microscope lens is substantially aligned in a predetermined direction with respect to the receiving surface.

2. The device as claimed in claim 1, wherein the first transmission window comprises a first transparent plate (222) which closes the end of the distal portion (221) of the mounting.

3. The device as claimed in claim 2, further comprising a first immersion medium (241) in contact with the first transparent plate and the microscope lens (210).

4. The device as claimed in one of the preceding claims, wherein the second transmission window comprises a second transparent plate (231) which closes the end of the first end piece (230).

5. The device as claimed in claim 4, wherein
- the first transmission window comprises a first transparent plate (222) which closes the end of the distal portion (221) of the mounting; and
- the device further comprises a second immersion medium (242) in contact with the first transparent plate (222) and the second transparent plate (231).

6. The device as claimed in one of the preceding claims, wherein the sample carrier comprises a third transparent plate (262) which closes the sample carrier.

7. The device as claimed in claim 6, wherein
- the first transmission window comprises a first transparent plate (222) which closes the distal portion (221) of the mounting; and
- the device further comprises a third immersion medium (243) in contact with the first transparent plate (222) and the third transparent plate (262).

8. The device as claimed in one of the preceding claims, further comprising a device (228) which is configured for illuminating the sample and which is arranged at one end of the distal portion (221) of the mounting.

9. The device as claimed in one of the preceding claims, wherein the mounting (220) is configured to be handheld in the first operating mode.

10. The device as claimed in one of the preceding claims, further comprising axial displacement means for the microscope lens (210) in the distal portion (221) of the mounting, along the optical axis (Δ).

11. The device as claimed in one of the preceding claims, further comprising axial adjustment means (275) of the support (270) in a direction parallel with the optical axis (Δ) and/or lateral adjustment means of the support in a plane substantially perpendicular to the optical axis and/or lateral adjustment means (265) of the sample carrier in a plane substantially perpendicular to the optical axis and/or axial adjustment means of the sample carrier in a direction parallel with the optical axis.

12. The device as claimed in one of the preceding claims, wherein the second end piece (250) comprises an external surface which is configured to cooperate with a surface of the support (270) to allow said alignment.

13. A microscopic analysis system (200) which is configured to operate in a first operating mode comprising in vivo microscopic analysis of the skin and in a second operating mode comprising ex vivo microscopic analysis of a sample, the system comprising:
- a device as claimed in one of claims 1 to 12;
- an illumination path which is configured to illuminate the sample or the skin;
- a detection path comprising the microscope lens, the detection path being configured to detect a light beam which is emitted by the sample or the skin which is illuminated and to generate a detection signal;
- a processing unit (290) which is configured to generate a microscopic analysis information item for the sample or the skin from the detection signal; and wherein
- all or some of the elements of the lighting and detection paths are included in the device.

14. The analysis system as claimed in claim 13, which is configured for confocal imaging and/or optical coherence tomography imaging, wherein the microscopic analysis information item comprises at least one image of the sample or the skin and/or configured for spectroscopic analysis, wherein the microscopic analysis information item comprises at least one spectrum of the light beam which is emitted by the sample or the skin at least at one location of the sample or the skin.

15. A method for ex vivo microscopic analysis of a sample and in vivo microscopic analysis of the skin by means of an analysis system as claimed in claim 13, comprising:
- removing the second end piece (250), fixing the first end piece (230) to the mounting (220) and doing an in vivo microscopic analysis of the skin;
- removing the first end piece (230), fixing the second end piece (250) to the mounting (220) and doing an ex vivo microscopic analysis of a sample.

16. The method for analysis of a sample as claimed in claim 15, wherein the microscopic analysis of the sample or the skin comprises confocal imaging and/or optical coherence tomography imaging of the sample or the skin and/or comprises spectroscopic analysis of the sample or the skin.
